# EUROPÄISCHE PATENTSCHRIFT

(11) **EP 2 548 757 B1**
(45) Veröffentlichungstag und Bekanntmachung des Hinweises auf die Patenterteilung: **29.10.2014**
(21) Anmeldenummer: 11174344.9
(22) Anmeldetag: 18.07.2011
(51) Int. Cl.: B60L 7/14, B60L 11/18, H02P 3/08, H02P 3/22, B60L 3/00

(54) **Antriebssystem und Verfahren zum Betrieb eines solchen Antriebssystems**
Drive system and method for operating such a drive system
Système d'entraînement et procédé de fonctionnement d'un tel système d'entraînement

(43) Veröffentlichungstag der Anmeldung: 23.01.2013
(73) Patentinhaber: Siemens Aktiengesellschaft, 80333 München (DE)
(72) Erfinder: Köpken, Hans-Georg, 91056 Erlangen (DE); Schwesig, Günter, 91054 Erlangen (DE)

(56) Entgegenhaltungen:
- EP-A2- 1 524 761
- US-A- 5 412 293
- US-A1- 2009 167 216

## Beschreibung

Die Erfindung betrifft ein Antriebssystem und ein Verfahren zum Betrieb eines solchen Antriebssystems, insbesondere für ein Elektrofahrzeug. Ein Elektrofahrzeug wird über eine vom Fahrzeug mitgeführte Batterie, eine Antriebsregelung, einen Wechselrichter und einen Elektromotor - im Folgenden nur noch als Motor bezeichnet - angetrieben. Zum Antriebssystem gehören dabei zumindest die Antriebsregelung und der Wechselrichter. Wenn eine Batterie und ein Motor angeschlossen sind, gehören auch diese zum Antriebssystem. Als Motor kommt dabei besonders ein permanenterregter Synchronmotor in Betracht. Solche Motoren haben einen hohen Wirkungsgrad und eine hohe Leistungsdichte. Aufgrund einer speziellen Drehzahl-zu-Drehmoment Charakteristik wird ein solcher Motor auch im Feldschwächbereich betrieben. Dazu wird dem Motor ein entsprechender Strom eingeprägt. Dieser Strom erzeugt ein magnetisches Feld, das dem durch die Permanentmagnete erzeugten Feld entgegenwirkt.

Im Fehlerfall kann allerdings der feldschwächende Strom nicht mehr aufrecht erhalten werden. Abhängig von der Art des Fehlers können dann unzulässige Drehmomente, nämlich Bremsmomente, und unzulässige Spannungen entstehen, die beherrscht werden müssen.

Bei Industrieantrieben stellt ein Bremsmoment im Fehlerfall normalerweise kein Problem dar, da immer ein bestmöglichstes und schnelles Abbremsen gewünscht ist.

Zum Abbremsen eines Elektromotors ist die so genannte Ankerkurzschlussbremsung an sich bekannt. Eine solche Abbremsung kommt eher dann in Betracht, wenn der Motor nicht mehr (anderweitig) elektrisch gebremst werden kann, da der bewirkte Kurzschluss einen kurzzeitig hohen Stromfluss zur Folge hat. Bei der Ankerkurzschlussbremsung - oder kurz: beim Ankerkurzschluss - werden im Fehlerfall die drei oberen oder die drei unteren Transistoren (IGBTs) des Wechselrichters eingeschaltet. Zum druckschriftlichen Beleg kann auf die EP 1 524 761 A verwiesen werden. Die Ständerwicklungen des Motors werden dabei kurzgeschlossen, so dass zwischen diesen Strom fließen kann. Der Rotor wird so zum Stehen gebracht. Über den gesamten Drehzahlbereich ergibt sich dabei ein Bremsmoment, das bei typischen Motorauslegungen gerade noch akzeptabel ist.

Allerdings ist die Wahrscheinlichkeit, dass ein IGBT-Modul oder eine zu dessen Ansteuerung vorgesehene Ansteuerschaltung so ausfällt, dass ein Ankerkurzschluss nicht mehr möglich ist, vergleichsweise hoch, zumindest so hoch, dass damit nicht die Sicherheitsanforderungen erfüllt werden können.

Bei einem Defekt in einem IGBT-Modul ist von allen denkbaren Fehlern hinsichtlich der von dem Modul umfassten Transistoren und Freilaufdioden auszugehen.

Wenn zum Beispiel weder die unteren noch die oberen Transistoren einschaltbar sind, entsteht das Problem, dass normalerweise die elektromotorische Kraft (EMK) des Motors bei hohen Drehzahlen nach Wegfall des Entmagnetisierungsstroms und bei offenen Motoranschlüssen um Faktoren gegenüber der Nennspannung ansteigen würde. Dies wird zwar dadurch verhindert, dass die Ständerspannung über die Freilaufdioden auf die Batteriespannung geklemmt ist, aber dadurch ergibt sich als Ausnahmesituation ein hoher Rückspeisestrom in die Batterie, der ein hohes, unerlaubtes Bremsmoment erzeugt. Sobald die Drehzahl so weit abgesunken ist, dass die gleichgerichtete EMK niedriger als die Batteriespannung ist, wird das Bremsmoment Null.

Wenn einerseits die Transistoren nicht mehr für einen Ankerkurzschluss einschaltbar sind und andererseits die Freilaufdioden nicht mehr leitend sind, so entsteht als weitere Ausnahmesituation an den Motoranschlüssen bzw. am Ausgang des Wechselrichters eine sehr hohe Spannung. Diese kann zur Zerstörung des Wechselrichters und/oder des Motors und im Weiteren zu Lichtbögen mit Brandfolge führen und die sichere elektrische Trennung von Wechselrichter und Motor aufheben.

Die US 5,412,293 beschreibt eine DC-Versorgungseinheit eines Antriebssystems für ein Elektrofahrzeug, welche neben der Batterie eine Serienkapazität und eine Parallelkapazität umfasst und die Szenarien, in denen diese zusätzlichen Kapazitäten mittels Ansteuerung einzelner von der DC-Versorgungseinheit umfasster Halbleiterschalter ge- und entladen werden.

Eine Aufgabe der vorliegenden Erfindung besteht ausgehend von der eingangs skizzierten Problematik darin, ein Verfahren und/oder eine Vorrichtung anzugeben, mit dem die oben genannten Fehler mit ausreichender Sicherheit beherrschbar sind. Ein spezieller Aspekt der Aufgabe besteht dabei darin, ein solches Verfahren und/oder eine solche Vorrichtung anzugeben, die bzw. das sich zur Verwendung in oder mit Elektrofahrzeugen eignet.

Diese Aufgabe wird erfindungsgemäß mit den Merkmalen des Anspruchs 1 (Vorrichtung) sowie mit den Merkmalen des Anspruchs 3 (Vorrichtung) sowie im Weiteren mit den Merkmalen der Ansprüche 4 und 5 (Verfahren) gelöst. Dazu ist zunächst bei einem Antriebssystem für einen Elektromotor mit einer Anschlussmöglichkeit für eine Batterie, mit einem Wechselrichter, mit einem auf dessen Eingangsseite befindlichen Zwischenkreis und mit einer Anschlussmöglichkeit für einen Elektromotor auf dessen Ausgangsseite, ein im Zwischenkreis parallel zu einer Zwischenkreiskapazität geschalteter und von einem vom Antriebssystem umfassten oder dem Antriebssystem zugeordneten Beobachter aktivierbarer Thyristor vorgesehen. Alternativ oder zusätzlich ist vorgesehen, dass das Antriebssystem einen Gleichrichter ausgangsseitig des Wechselrichters und parallel zu einem angeschlossenen oder anschließbaren Elektromotor sowie ausgangsseitig des Gleichrichters einen vom Antriebssystem umfassten oder dem Antriebssystem zugeordneten Beobachter aktivierbaren Thyristor umfasst.

Zur Unterscheidung wird im Folgenden der im Zwischenkreis vorgesehene Thyristor als erster Thyristor und der auf der Ausgangsseite des Gleichrichters vorgesehene Thyristor als zweiter Thyristor bezeichnet. Nachdem das Antriebssystem alternativ oder kumulativ um den ersten Thyristor einerseits und den Gleichrichter und den zweiten Thyristor andererseits ergänzt werden kann, bezieht sich die Beschreibung auch auf ein Antriebssystem, das keinen ersten Thyristor sondern nur den Gleichrichter und den zweiten Thyristor umfasst oder nur den ersten Thyristor und keinen Gleichrichter mit dem zweiten Thyristor umfasst.

Der Vorteil der Erfindung in Anspruch 1 besteht darin, dass mit dem ersten Thyristor im Zwischenkreis eine Situation beherrschbar ist, in der es zu einer unerwünschten Rückspeisung in die Batterie kommt. Dann ist eine Aktivierung des ersten Thyristors vorgesehen und dessen sogenannte Zündung bewirkt im Zwischenkreis und über die vom Wechselrichter in an sich bekannter Art umfassten Freilaufdioden einen Ankerkurzschluss.

Der Vorteil der Erfindung besteht bei der zusätzlichen oder alternativen Ausführungsform des Antriebssystems gemäß Anspruch 3 weiterhin darin, dass mit dem Gleichrichter und dem zweiten Thyristor Überspannungen am Ausgang des Wechselrichters beherrschbar sind. Eine solche Überspannung am Ausgang des Wechselrichters kann sich ergeben, wenn die Freilaufdioden des Wechselrichters nicht mehr leiten oder wenn dessen Transistoren nicht mehr schaltbar sind. An zum Anschluss des Motors vorgesehenen Klemmen oder - elektrisch identisch oder zumindest im Wesentlichen identisch - an die Ausgangsklemmen des Wechselrichters, also parallel zu einem an die Antriebssteuereinheit angeschlossenen Motor, ist oder wird als Wechselrichter ein insbesondere sechspulsiger Gleichrichter und über dessen Ausgangsseite der zweite Thyristor angeschlossen. Beim Aktivieren des zweiten Thyristors wird über die Dioden des Gleichrichters ein Ankerkurzschluss erzeugt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn das Antriebssystem elektrisch zwischen der Batterie und dem Zwischenkreis eine Sicherung aufweist, wobei die Sicherung und der erste Thyristor bei einer Aktivierung des ersten Thyristors hinsichtlich eines über den ersten Thyristor (40) geschlossenen Stromkreises mit der Batterie als Stromquelle in Reihe geschaltet sind, fließt ein Kurzschlussstrom der Batterie über die Sicherung und den ersten Thyristor, der die Sicherung innerhalb kürzester Zeit auslöst und so den Wechselrichter mitsamt dem Zwischenkreis elektrisch von der Batterie trennt. Diese elektrische Trennung schützt auch den ersten Thyristor vor einer Zerstörung durch den Kurzschlussstrom.

Der erste oder der zweite Thyristor werden jeweils durch den Beobachter ausgelöst, wenn eine bestimmte Ausnahmesituation vorliegt, die durch die Aktivierung des jeweiligen Thyristors beherrscht werden soll. Für die Aktivierung des ersten Thyristors vergleicht der Beobachter kontinuierlich oder regelmäßig, vorzugsweise zu äquidistanten Zeitpunkten, ob die Zwischenkreisspannung U_ZK oder ein Maß für die Zwischenkreisspannung einen vorgegebenen oder vorgebbaren Schwellwert überschreitet. Dafür umfasst der Beobachter die Funktionalität eines Komparators (entweder in Hardware, Firmware oder Software) und Mittel zur Zuführung des Maßes für die Zwischenkreisspannung U_ZK und des Schwellwerts zum Komparator sowie Mittel zur Weiterleitung und Ausgabe eines Signals je nach Ergebnis der vom Komparator durchgeführten Vergleichs.

Zusätzlich oder alternativ berechnet der Beobachter auf Basis der gemessenen Ströme und Spannungen das Drehmoment und vergleicht dieses mit dem Sollwert. Überschreitet die Abweichung eine untere oder eine obere Schwelle, so wird ebenfalls eine Zündung des Thyristors durchgeführt. Für die Aktivierung des zweiten Thyristors ist ein entsprechendes Verfahren vorgesehen und hier vergleicht - korrespondierend zur vorangehenden Erläuterung - der Beobachter, ob Maß für eine Ausgangsspannung des Wechselrichters einen vorgegebenen oder vorgebbaren Schwellwert überschreitet.

Wenn der Beobachter zusätzlich zur Aktivierung des ersten Thyristors bzw. zusätzlich zur Aktivierung des zweiten Thyristors, insbesondere nach Verstreichen einer vorgegebenen oder vorgebbaren Wartezeit, entweder die drei unteren Transistoren des Wechselrichters oder die drei oberen Transistoren des Wechselrichter oder die unteren und die oberen Transistoren zusammen aktiviert, führt ein auf diese Weise bewirkter Ankerkurzschluss dazu, dass der zuvor gezündete Thyristor wieder gelöscht wird. Je nach Durchlasskennlinie der Thyristoren und der Transistoren kann es erforderlich sein, z.B. durch eine zum Thyristor in Reihe geschaltete Diode dafür zu sorgen, dass beim Einschalten der Transistoren der Strom in den Thyristoren unter den Haltestrom fällt.

Als Kriterium für eine spätere Aufhebung der Aktivierung der Transistoren des Wechselrichters kommt in Betracht, dass durch den Beobachter überwacht wird, wann ein Maß für eine Drehzahl des Elektromotors einen vorgegebenen oder vorgebbaren Schwellwert unterschreitet. Mit einem dafür vorgesehenen Soft-, Firm- oder Hardwarekomparator kann durch den Beobachter ein elektrisches Signal zur Aufhebung der Aktivierung der Transistoren des Wechselrichters generiert werden und damit auch der Ankerkurzschluss wieder aufgehoben werden.

Die oben genannte Aufgabe wird auch mit einer hier und im Folgenden als Beobachter bezeichneten Steuerungseinrichtung zur Überwachung des Antriebssystems und zur Aktivierung davon umfasster Leistungsbauteile, nämlich Transistoren und/oder Thyristoren, gelöst, die nach einem Verfahren wie hier und im Folgenden beschrieben arbeitet und dazu Mittel zur Durchführung des Verfahrens umfasst. Hinsichtlich dieses Aspektes ist die Erfindung bevorzugt in Software oder in Firmware oder einer Kombination von Soft- und Firmware implementiert. Die Erfindung ist damit einerseits auch ein Computerprogramm mit durch einen Computer, nämlich z.B. eine Verarbeitungseinheit des Beobachters nach Art eines Mikroprozessors oder ASICs, ausführbaren Programmcodeanweisungen und andererseits ein Speichermedium mit einem derartigen Computerprogramm sowie schließlich auch eine Steuerungseinrichtung oder ein Antriebssystem mit einem Speicher, in den als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Es zeigen:
- FIG 1: ein Antriebssystem nach dem Stand der Technik,
- FIG 2 und 3: Darstellungen eines Drehmomentverlaufs in bestimmten Fehlerfällen/Ausnahmesituationen,
- FIG 4: ein Antriebssystem gemäß der Erfindung, sowie
- FIG 5: ein mit dem Antriebssystem gemäß FIG 4 realisierbarer Drehmomentverlauf.

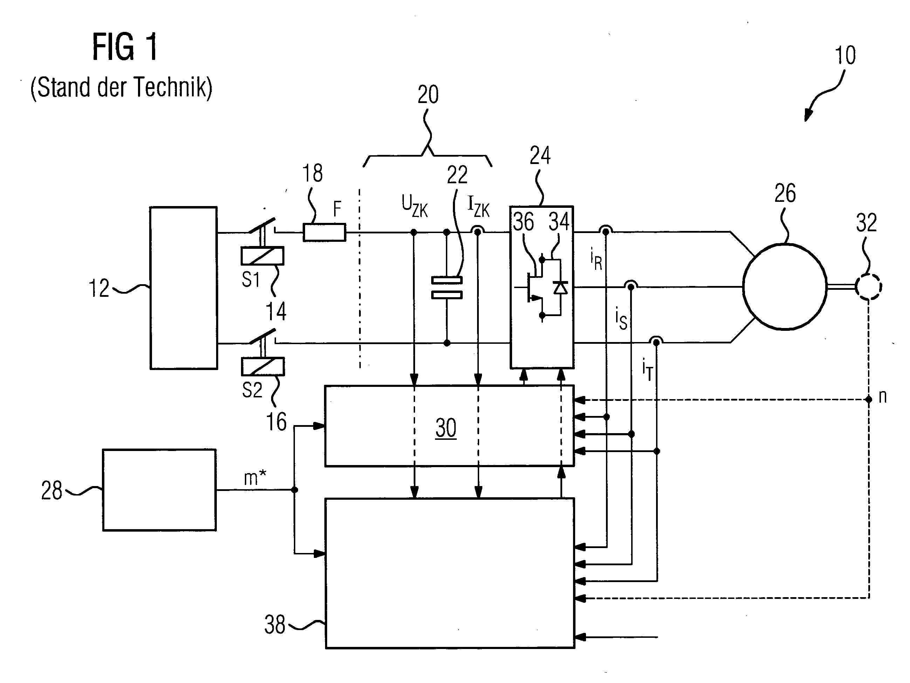

FIG 1 zeigt schematisch vereinfacht ein Antriebssystem 10 für ein selbst nicht dargestelltes Elektrofahrzeug. Das Antriebssystem 10 umfasst eine Batterie 12, insbesondere eine Hochvoltbatterie, die über einen ersten und einen zweiten Schalter 14, 16 und eine Sicherung 18 an einen Zwischenkreis 20 mit einer Zwischenkreiskapazität 22 angeschlossen ist. Auf den Zwischenkreis 20 folgt ein hier und im Folgenden auch als IGBT-Modul bezeichneter Wechselrichter 24 und an diesen ist dreiphasig ein Motor (Elektromotor) 26 angeschlossen.

Zur Fahrsteuerung ist ein Fahrsteuerungsmodul 28 vorgesehen, das einen Drehmomentensollwert (m*) generiert und diesen zumindest an eine Antriebsregelung 30 als Sollwert für eine dort implementierte Regelung weiterleitet. Der Drehmomentensollwert kann mittelbar oder unmittelbar durch das Fahrsteuerungsmodul 28, zum Beispiel anhand einer Stellung eines Pedals ("Gaspedal"), gebildet oder abgeleitet werden.

Die Antriebsregelung 30 wertet für den Regelungsvorgang Messwerte, nämlich Messwerte für eine Zwischenkreisspannung U_ZK, einen Zwischenkreisstrom I_ZK und für die Phasenströme i_R, i_S, i_T zum Motor 26, aus. Optional ist über einen Encoder 32 noch eine Erfassung einer momentanen Drehzahl n des Motors 26 möglich, so dass diese ggf. als weiterer Messwert zur Verfügung steht. Die Antriebsregelung steuert anhand des vorgegebenen Drehmomentensollwerts m* und der Momentanwerte einzelner oder aller Messwerte den Wechselrichter 24, nämlich einen oder mehrere der davon umfassten und jeweils parallel mit einer Freilaufdiode 34 geschalteten Transistoren 36, an.

Für die in der Beschreibungseinleitung vorgestellten, bekannten Sicherungsmaßnahmen kommt ein insbesondere sicherheitsgerichteter Drehmomentbeobachter 38 in Betracht, der im Folgenden mitunter auch noch kurz nur als Beobachter 38 bezeichnet wird. Eine Ansteuerung des Wechselrichters 24, nämlich der drei unteren und/oder oberen Transistoren 36, kann zum Beispiel den Eingangs beschriebenen Ankerkurzschluss bewirken.

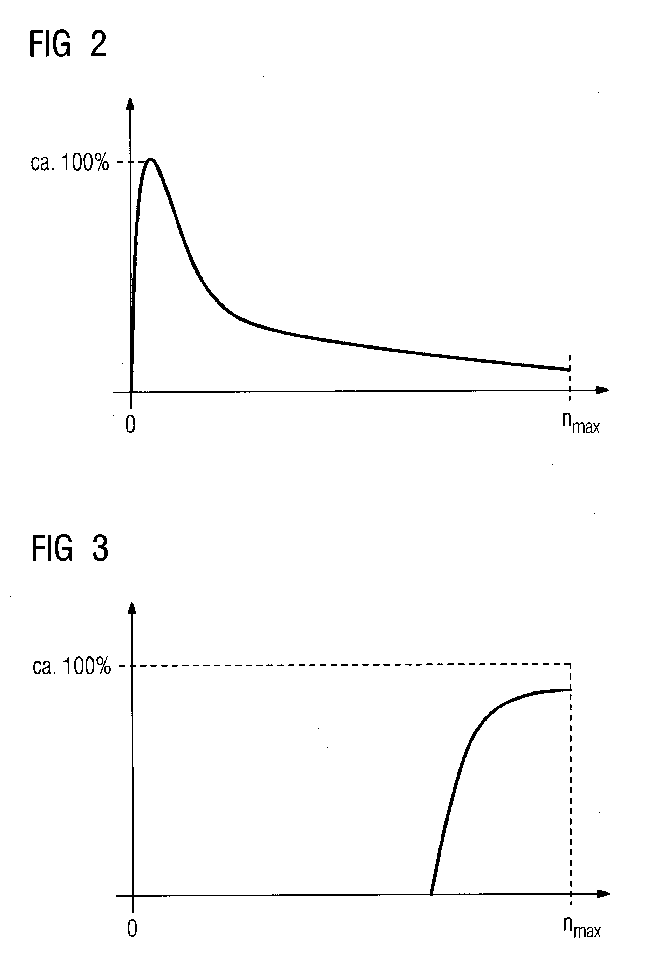

Dazu zeigt FIG 2 über der Drehzahl aufgetragen das sich bei einem Ankerkurzschluss ergebende Drehmoment/Bremsmoment. Man erkennt, dass sich ausgehend von einer Maximaldrehzahl n max im gesamten Drehzahlbereit ein Bremsmoment ergibt und dass dieses in Richtung niedriger Drehzahlen ansteigt und kurz vor Stillstand des Motors 26 (Drehzahl Null) ein Maximum erreicht. FIG 3 zeigt sodann eine Darstellung des Bremsmoments über der Drehzahl im Falle der Eingangs ebenfalls erläuterten Rückspeisung in die Batterie 12. Hier liegt bei hohen Drehzahlen, insbesondere auch bei der Maximaldrehzahl n_max, ein hohes Bremsmoment vor, das in Richtung niedrigerer Drehzahlen verschwindet. Die Angabe von 100% bezieht sich in beiden Darstellungen (FIG 2 und FIG 3) auf das maximale Drehmoment.

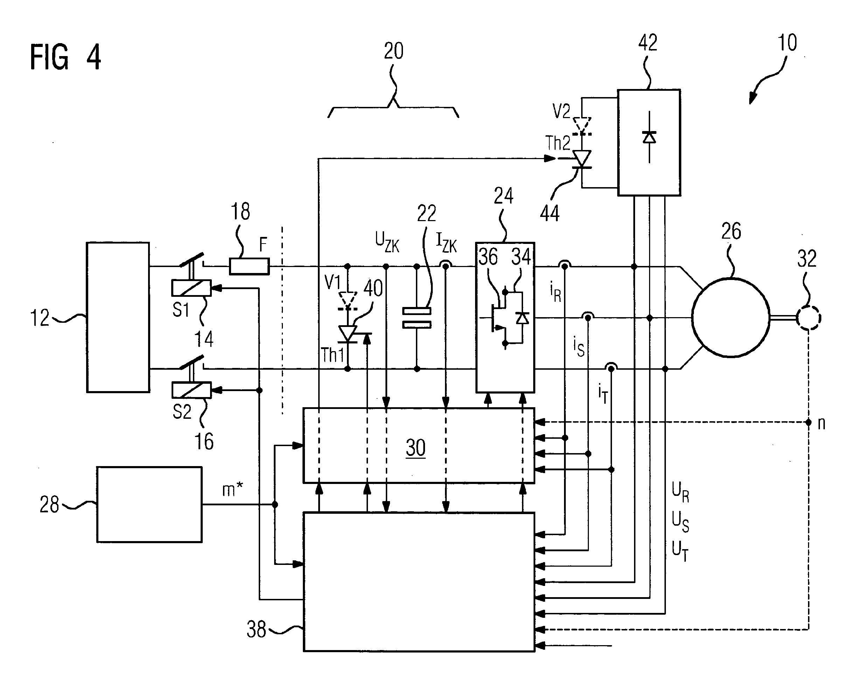

FIG 4 zeigt nunmehr ein Antriebssystem 10 auf der Basis des in FIG 1 bereits dargestellten Antriebssystems 10, so dass auf die dortigen Erläuterungen verwiesen wird, mit Mitteln zur Drehmomentreduzierung und zur Spannungsbegrenzung, die jeweils im Fehlerfall aktiviert werden.

Aus den Systemgrößen des Antriebssystems 10, nämlich den im Zusammenhang mit der Beschreibung der Darstellung in FIG 1 bereits erläuterten Messwerten, sowie zusätzlichen Messwerten hinsichtlich der jeweiligen Spannungen u_R, u_S, u_T zwischen den drei den Motor 26 speisenden Phasen, einem Messwert für eine aktuelle Drehzahl n und/oder einer Motorstellung sowie evtl. Messwerten für ein aktuelles Drehmoment kann mit dem Beobachter 38 der Zustand des Antriebssystems 10, insbesondere das jeweilige Drehmoment, überwacht werden.

Je nach Fehlerfall oder Zustand des Systems 10 werden von dem Beobachter 38 als Steuerungseinrichtung entsprechende Aktionen ausgelöst. Die dafür vorgesehnen Aktoren sind zunächst der vom System 10 ohnehin umfasste (vgl. FIG 1) Wechselrichter 24 und sodann als zusätzliche Bestandteile des Systems 10 ein erster elektronischer Schalter, insbesondere ein Thyristor - erster Thyristor 40 - sowie ein Gleichrichter 42 und ein zweiter elektronischer Schalter, insbesondere ein Thyristor - zweiter Thyristor 44.

Der erste Thyristor 40 wird zur Verhinderung unerwünschter Rückspeisungen in die Batterie 12 benötigt. Der Gleichrichter 42 und der zweite Thyristor 44 werden zur Behandlung einer Überspannung am Ausgang des Wechselrichters 24 benötigt. Ein Antriebssystem 10, das sowohl den ersten Thyristor 40 als auch den Gleichrichter 42 und den zweiten Thyristor 44 umfasst, kann beide Ausnahmesituationen beherrschen. Dennoch ist grundsätzlich auch ein Antriebssystem 10 denkbar bei dem die Beherrschung einer der beiden oben erwähnten Ausnahmesituationen ausreicht oder im Vordergrund steht. Insofern sind der erste Thyristor 40 einerseits und der Gleichrichter 42 und der zweite Thyristor 44 andererseits sowie eine entsprechende Auslegung des Beobachters 38 zu deren Ansteuerung als optionale, alternative Bestandteile des Antriebssystems 10 anzusehen. Im Folgenden wird die Beschreibung fortgesetzt für ein Antriebssystem 10, das sowohl den ersten Thyristor 40 wie auch den Gleichrichter 42 und den zweiten Thyristor 44 umfasst. Der erste und der zweite Thyristor 40, 44 kann grundsätzlich jeweils auch durch einen Transistor ersetzt werden. Zur Unterscheidung von den Transistoren 36 des Wechselrichters 24 wird die Beschreibung auf der Basis von Thyristoren 40, 44 als jeweiligem Schaltelement fortgesetzt, wobei insoweit der Begriff "Thyristor" jeweils "Thyristor oder Transistor" meint.

Der erste Thyristor 40 wird bei bestimmten Fehlern oder Ausnahmesituationen durch den Beobachter 38 aktiviert (gezündet) und zwar wenn eine Überspannung im Zwischenkreis 20 oder am Eingang des Wechselrichters 24 detektiert wird, wenn also eine solche Zwischenkreisspannung U_ZK oder ein vom Beobachter 38 verarbeitbares Maß für die Zwischenkreisspannung einen vorgegebenen oder vorgebbaren Schwellwert überschreitet. Durch das Einschalten des ersten Thyristors 40 entsteht im Zwischenkreis 20 über die Freilaufdioden 34 des Wechselrichters 24 ein Ankerkurzschluss. Bei einer Ausführungsform des Antriebssystems 10 kann die in FIG 1 und FIG 4 gezeigte Sicherung 18 in die von der Batterie 12 kommende Zuleitung geschaltet sein. Mit einer solchen Sicherung 18 kann aufgrund des bei Aktivierung des ersten Thyristors 40 fließenden Kurzschlussstroms der Batterie 12 mit dem Ansprechen der Sicherung 18 der Wechselrichter 24 elektrisch von der Batterie 12 getrennt werden. Dies vermeidet zum Beispiel eine Zerstörung des ersten Thyristors 40 durch den Kurzschlussstrom der Batterie 12.

Wenn in der jeweiligen Ausnahmesituation der Wechselrichter 24 noch funktionsfähig ist, können durch den Beobachter 38 zusätzlich dessen drei untere oder dessen drei obere Transistoren 36 oder alle Transistoren 36 eingeschaltet werden. Bei Aktivierung entweder der unteren oder der oberen Transistoren 36 ergibt sich jeweils genau ein zusätzlicher elektrischer Pfad für den Ankerkurzschluss. Bei Aktivierung aller Transistoren 36 ergeben sich zwei zusätzliche, redundante elektrische Pfade für den Ankerkurzschluss.

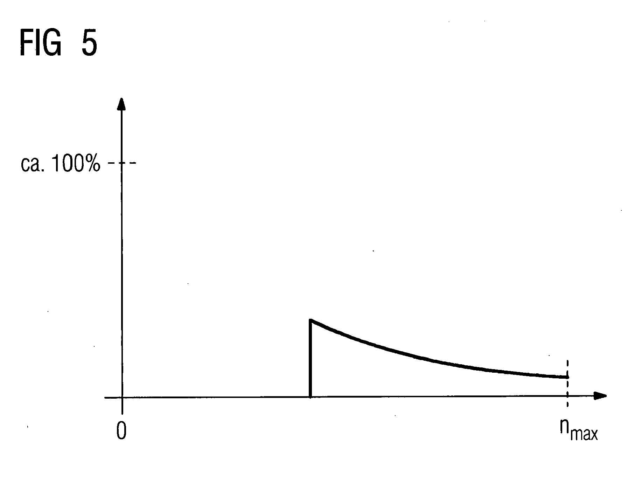

Vorteilhaft ist dabei, dass mit dem Ankerkurzschluss über den Wechselrichter 24 der erste Thyristor 40 wieder verlischt, also abgeschaltet wird (Haltespannung ist höher als Durchlassspannung der Transistoren 36; ggf. ist in Reihe mit dem ersten Thyristor 40 eine in der Darstellung in FIG 4 bereits eingezeichnete Zusatzdiode V1 erforderlich). Der Ankerkurzschluss wird dann über die Transistoren 36 des Wechselrichters 24 aufrecht erhalten. Sobald eine vorgegebene oder vorgebbare Drehzahl des Motors 26 unterschritten ist, sobald also die Drehzahl oder ein Maß für eine solche Drehzahl einen vorgegebenen oder vorgebbaren Schwellwert unterschreitet, kann der Beobachter 38 die Transistoren 36 wieder ausschalten. Dies hebt den Ankerkurzschluss auf und das ansonsten hohe Bremsmoment im unteren Drehzahlbereich kann auf Null reduziert werden, wie die Darstellung in FIG 5 in einem gleichen Koordinationssystem wie bei den Darstellungen in FIG 2 und FIG 3 zeigt.

Auch der zweite Thyristor 44 wird bei bestimmten Fehlern oder Ausnahmesituationen durch den Beobachter 38 aktiviert (gezündet) und zwar wenn eine Überspannung an einem der Ausgänge des Wechselrichters 24 detektiert wird, wenn also eine solche Ausgangsspannung oder ein vom Beobachter 38 verarbeitbares Maß für die Wechselrichterausgangsspannung einen vorgegebenen oder vorgebbaren Schwellwert überschreitet.

Durch das Einschalten des zweiten Thyristors 44 entsteht über die Transistoren des entsprechend dem dreiphasigen Anschluss als sechspulsiger Gleichrichter ausgeführten Gleichrichters 42 ein Ankerkurzschluss. Der Gleichrichter 42 ist auf der Ausgangsseite des Wechselrichters 24 an dort vorgesehene Motorklemmen angeschlossen. Bei einem an das Antriebssystem 10 angeschlossenen Motor 26 sind also Motor 26 und Gleichrichter 42 am Ausgang des Wechselrichters 24 parallel angeschlossen. Der zweite Thyristor 44 ist auf einer Ausgangsseite, also der Gleichstromseite, des Gleichrichters 42 an dessen Ausgangsklemmen angeschlossen. Das durch den Beobachter 38 in der jeweiligen Ausnahmesituation bewirkte oder bewirkbare Zünden des zweiten Thyristors 44 bewirkt den Ankerkurzschluss und gleichzeitig einen Kurzschluss der Spannung zwischen Wechselrichter 24 und Motor 26.

Somit wird sowohl eine gefährlich hohe Spannung als auch ein gefährlich hohes Drehmoment bei hoher Drehzahl zuverlässig verhindert. Das im Folgenden dargestellte Verfahren, die Transistoren zusätzlich zu schalten, dient nur einer Verbesserung des Verhaltens. Die Sicherheit ist auch dann gewährleistet, wenn die Transistoren nicht mehr schaltbar sind. Das bedeutet auch, dass Störungen in der relativ komplizierten Steuerlogik für die Transistoren nicht zu einer Gefährdung der Sicherheit führen.

Bei bzw. kurz vor Aktivierung des zweiten Thyristors 44 sollte versucht werden, die noch schaltbaren Transistoren 36 des Wechselrichters 24 abzuschalten, um einen unnötigen Stromfluss zu verhindern. Bei einer Ausführung der Transistoren 36 mit Ansteuertreibern mit Überwachung der jeweiligen Kollektor-Emitter Spannung (U_CE) erfolgt eine selbsttätige Abschaltung der stromführenden, noch schaltbaren Transistoren 36, sobald der Thyristor leitet.

Falls die unteren bzw. die oberen Transistoren 36 wieder einschaltbar sind, kann auch hier durch Einschalten der unteren bzw. der oberen Transistoren der Thyristor zum Verlöschen gebracht werden. Dann kann durch den Beobachter 38 der Ankerkurzschluss wieder aufgehoben werden, sobald eine vorgegebene oder vorgebbare Drehzahl des Motors 26 unterschritten ist, sobald also die Drehzahl oder ein Maß für eine solche Drehzahl einen vorgegebenen oder vorgebbaren Schwellwert unterschreitet. Auf diese Weise wird - wie oben bereits für die eingangsseitige Sicherung beschrieben - das ansonsten hohe Bremsmoment im unteren Drehzahlbereich auf Null reduziert (FIG 5). Bevorzugt wird vor der Deaktivierung der Transistoren 36, also vor Aufhebung des Ankerkurzschlusses, der Wechselrichter 24 elektrisch von de Batterie 12 getrennt. Dafür bieten sich die Schalter 14, 16 in einer Ausführung als elektrisch oder elektronisch aktivierbare Schalter, zum Beispiel als Relais, an. Die Aktivierung eines Schalters 14, 16 oder beider Schalter 14, 16 erfolgt mittel- oder unmittelbar durch den Beobachter 38, aufgrund der jeweils festgestellten Ausnahmesituation, also zum Beispiel aufgrund einer Überspannung an der Ausgangsseite des Wechselrichters 24. Dadurch, dass der oder jeder Schalter 14, 16 nicht unter Strombelastung geöffnet werden muss, ergibt sich kein besonderer Verschleiß.

Die Zuverlässigkeit des Antriebssystems 10 lässt sich weiter erhöhen, wenn zusätzlich sogenannte schlafende Fehler durch sogenannte Zwangsdynamisierung, also eine absichtliche Auslösung einzelner Leistungsbauteile, aufgedeckt werden. Eine Möglichkeit in dieser Hinsicht besteht darin, dass der erste Thyristor 40 dadurch geprüft wird, dass immer nach dem Abstellen des Elektrofahrzeugs die beiden Schalter 14, 16 geöffnet werden, der Wechselrichter 24 also elektrisch von der Batterie 12 getrennt wird, und dann der erste Thyristor 40 aktiviert wird. Die Zwischenkreiskapazität 22 wird dann über den ersten Thyristor 40 entladen und der zu erwartende Stromfluss im Zwischenkreis 20 ist der Entladestrom der Zwischenkreiskapazität 22. Wenn der tatsächliche Zwischenkreisstrom I_ZK den erwarten Entladestrom um mehr als einen vorgegebenen oder vorgebbaren Schwellwert über- oder unterschreitet, ist ein Fehler hinsichtlich der Funktionalität des ersten Thyristors 40 erkannt. Diese Überprüfung kann durch den Beobachter 38 ausgeführt werden. Im Beobachter 38 sind dafür Werte für einen erwarteten Entladestrom und ein zugehöriger Schwellwert, mit dem festgelegt wird, welcher Wert des tatsächlichen Zwischenkreisstroms I_ZK noch als dem Erwartungswert entsprechend angesehen wird, hinterlegt.

Eine Möglichkeit zum Testen des Gleichrichters 42 und des zweiten Thyristors 44 besteht darin, dass unter Kontrolle des Beobachters 38 bei stehendem Fahrzeug durch den Wechselrichter 24 nacheinander kurze Spannungspulse in allen sechs Schaltkombinationen ausgegeben werden und gleichzeitig der zweite Thyristor 44 gezündet wird. Indem durch den Beobachter 38 durch Auswertung entsprechender Messwerte überprüft wird, ob jeweils ein Strom i_R, i_S, i T fließt, können alle sechs Dioden im Gleichrichter 42 und der zweite Thyristor 44 getestet werden. Die Spannungspulse müssen dabei so kurz sein, dass der resultierende Strom nicht zu hoch wird. Ggf. ist zur Begrenzung des Stromanstiegs eine in der Darstellung in FIG 4 bereits eingezeichnete Diode V2 - evtl. eine Reihenschaltung der Diode V2 mit einer kleinen Drossel - in Serie mit dem zweiten Thyristor 44 vorgesehen. Alternativ können die Spannungspulse jeweils vor dem Zünden des Thyristors auf den Motor gegeben werden. Erst nach dem Sperren der Transistoren am Ende des jeweiligen Spannungspulses wird der Thyristor gezündet. Die Abklingzeit des Stromes ist mit erfolgreich gezündetem Thyristor wesentlich länger als bei nicht leitendem Thyristor bzw. bei defekten Dioden. So lassen sich ebenfalls alle Dioden des Gleichrichters und der Thyristor testen.

Einzelne im Vordergrund stehende Aspekte der hier eingereichten Beschreibung lassen sich damit kurz wie folgt zusammenfassen: Zur Reduzierung des Bremsmoments und/oder zum Überspannungsschutz im Fehlerfall werden zusätzlich zum Wechselrichter 24 ein erster Thyristor 40 im Zwischenkreis 20 und/oder ein zweiter Thyristor 44 sowie ein Gleichrichter 42 auf der Ausgangsseite des Wechselrichters 24 eingesetzt. Diese zusätzlichen Aktoren 40, 42, 44 und der Wechselrichter 24 werden über einen insbesondere sicherheitsgerichteten Drehmomentmonitor (Beobachter 38) angesteuert. Die Auswahl, welcher Aktor 24, 40, 42, 44 bzw. welche davon umfassten Schaltelemente 36 angesteuert werden, werden aus Systemgrößen wie Strom (I_ZK, i_R, i_S, i_T), Spannung (U_ZK, u_R, u_S, u_T) und/oder Position oder Drehzahl (m) des Motors 26, usw. abgeleitet. Insgesamt ermöglicht das hier vorgeschlagene Antriebssystem 10 einen mehrfach redundanten Ankerkurzschluss. Außerdem kann der Wechselrichter 24 bei der Ausführungsform mit zumindest dem ersten Thyristor 40 zumindest eingangsseitig elektrisch von der Batterie 12 und bei der Ausführungsform mit dem ersten Thyristor 40 einerseits und dem Gleichrichter 42 und dem zweiten Thyristor 44 andererseits beidseitig elektrisch von den Energielieferanten (Batterie 12, Motor 26) kontaktlos getrennt werden. Weiterhin kann durch Einschalten aller Transistoren 36 des Wechselrichters 24 der jeweils aktivierte Thyristor 40, 44 einfach wieder gelöscht werden. Schließlich können zum Aufschalten der Batteriespannung normalerweise ohnehin notwendige Schalter 14, 16 in das Sicherheitskonzept einbezogen werden und die sicherheitsrelevanten Leistungsbauteile 40, 42, 44 können durch spezielle durch den Beobachter 38 bewirkte Schaltstellungen und Ansteuerverfahren auf Funktionstüchtigkeit überprüft werden.

## Patentansprüche

1. Antriebssystem (10) für einen Elektromotor (26) mit einer Anschlussmöglichkeit für eine Batterie (12),
einem Wechselrichter (24),
einem auf dessen Eingangsseite befindlichen Zwischenkreis (20) und
einer Anschlussmöglichkeit für einen Elektromotor (26) auf dessen Ausgangsseite,
**gekennzeichnet durch**,
einen im Zwischenkreis (20) parallel zu einer Zwischenkreiskapazität (22) geschalteten und von einem vom Antriebssystem (10) umfassten oder dem Antriebssystem (10) zugeordneten Beobachter (38) aktivierbaren ersten Thyristor (40),
wobei der erste Thyristor (40) **durch** den Beobachter (38) aktivierbar ist, wenn ein Maß für eine Zwischenkreisspannung einen vorgegebenen oder vorgebbaren Schwellwert überschreitet und
wobei mittels des aktivierten Thyristors (40) im Zwischenkreis (20) und über vom Wechselrichter (24) umfasste Freilaufdioden ein Ankerkurzschluss eines angeschlossenen Elektromotors (26) bewirkbar ist.

2. Antriebssystem nach Anspruch 1, mit einer Sicherung (18) zwischen der Batterie (12) und dem Zwischenkreis (20), wobei die Sicherung (18) und der erste Thyristor (40) bei einer Aktivierung des ersten Thyristors (40) hinsichtlich eines über den ersten Thyristor (40) geschlossenen Stromkreises mit der Batterie (12) als Stromquelle in Reihe geschaltet sind.

3. Antriebssystem (10) für einen Elektromotor (26) mit einer Anschlussmöglichkeit für eine Batterie (12),
einem Wechselrichter (24),
einem auf dessen Eingangsseite befindlichen Zwischenkreis (20) und
einer Anschlussmöglichkeit für einen Elektromotor (26) auf dessen Ausgangsseite,
oder Antriebssystem nach einem der Ansprüche 1 oder 2,
**gekennzeichnet durch**,
einen Gleichrichter (42) ausgangsseitig des Wechselrichters (24) und parallel zu einem angeschlossenen oder anschließbaren Elektromotor (26) sowie
ausgangsseitig des Gleichrichters (42) einen vom Antriebssystem (10) umfassten oder dem Antriebssystem (10) zugeordneten Beobachter (38) aktivierbaren zweiten Thyristor (44).

4. Verfahren zum Betrieb eines Antriebssystems (10) nach einem der Ansprüche 1 oder 2, wobei der erste Thyristor (40) durch den Beobachter (38) aktiviert wird, wenn ein Maß für eine Zwischenkreisspannung einen vorgegebenen oder vorgebbaren Schwellwert überschreitet und wobei mittels des aktivierten Thyristors (40) im Zwischenkreis (20) und über vom Wechselrichter (24) umfasste Freilaufdioden ein Ankerkurzschluss eines angeschlossenen Elektromotors (26) bewirkt wird.

5. Verfahren zum Betrieb eines Antriebssystems (10) nach Anspruch 3, wobei der zweite Thyristor (44) durch den Beobachter (38) aktiviert wird, wenn ein Maß für eine Ausgangsspannung des Wechselrichters (24) einen vorgegebenen oder vorgebbaren Schwellwert überschreitet.

6. Verfahren nach Anspruch 4 oder Anspruch 5, wobei der Beobachter (38) zusätzlich zur Aktivierung des ersten Thyristors (40) bzw. zusätzlich zur Aktivierung des zweiten Thyristors (44) entweder die drei unteren Transistoren (36) des Wechselrichters (24) oder die drei oberen Transistoren (36) des Wechselrichter (24) oder die unteren und die oberen Transistoren (36) zusammen aktiviert.

7. Verfahren nach Anspruch 6, wobei bei durch den Beobachter (38) die Aktivierung der Transistoren (36) des Wechselrichters (24) aufgehoben wird, wenn ein Maß für eine Drehzahl des Elektromotors (26) einen vorgegebenen oder vorgebbaren Schwellwert unterschreitet.

8. Verfahren nach Anspruch 5 oder einen der Ansprüche 6 oder 7, soweit auf Anspruch 5 rückbezogen, wobei der Wechselrichter (24) vor dem Aufheben der Aktivierung der Transistoren (36) des Wechselrichters (24), insbesondere durch den Beobachter (38), elektrisch von der Batterie (12) getrennt wird, insbesondere durch Öffnung zumindest eines elektrischen oder elektronischen Schalters (14,16) zwischen Batterie (12) und Zwischenkreis (20).

9. Verfahren zum Testen des Antriebssystems nach einem der Ansprüche 1 oder 2, wobei der Stromrichter (24) elektrisch von der Batterie (12) getrennt und der erste Thyristor (40) aktiviert wird und wobei ein sich dann ergebender Zwischenkreisstrom durch den Beobachter (38) mit einem erwarteten Zwischenkreisstrom verglichen wird.

10. Verfahren zum Testen des Antriebssystems nach Anspruch 3, wobei durch den Beobachter (38) einerseits der zweite Thyristor (44) aktiviert und andererseits der Wechselrichter (24) zum Ausgeben aufeinander folgender kurzer Spannungspulse angesteuert wird und wobei durch den Beobachter (38) während eines jeden Spannungspulses oder nach einem jeden Spannungspuls überwacht wird, ob der jeweilige Spannungspuls zu einem Stromfluss führt

11. Computerprogramm mit Programmcodemitteln, um alle Schritte von jedem beliebigen der Ansprüche 4 bis 10 durchzuführen, wenn das Computerprogramm auf einem Beobachter (38) als Steuerungseinrichtung eines Antriebssystems (10) nach einem der Ansprüche 1 bis 3 oder als Steuerungseinrichtung für ein solches Antriebssystem (10) ausgeführt wird.

12. Computerprogrammprodukt mit elektronisch auslesbaren Steuersignalen, die so mit einem Beobachter (38) als Steuerungseinrichtung in oder für einem Antriebssystem (10) nach einem der Ansprüche 1 bis 3 zusammenwirken können, dass ein Verfahren nach einem der Ansprüche 4 bis 10 ausgeführt wird.

13. Antriebssystem nach einem der Ansprüche 1 bis 3, wobei der Beobachter (38) eine Verarbeitungseinheit nach Art eines Mikroprozessors aufweist und einen Speicher umfasst oder Zugriff auf einen solchen Speicher hat und wobei in den Speicher ein Computerprogramm nach Anspruch 11 geladen ist.

## Claims

1. Drive system (10) for an electric motor (26) having a connection means for a battery (12),
an inverter (24),
an intermediate circuit (20) present on its input side and a connection means for an electric motor (26) on its output side,
**characterised by**
a first thyristor (40) connected in the intermediate circuit (20) parallel to an intermediate circuit capacitance (22) and able to be activated by an observer (38) contained in the drive system (10) or assigned to the drive system (10),
wherein the first thyristor (40) can be activated by the observer (38) when a measure of an intermediate circuit voltage exceeds a predetermined or predeterminable threshold value and
wherein due to the activated thyristor (40) an armature short circuit of a connected electric motor (26) can be effected in the intermediate circuit (20) and across freewheeling diodes contained by the inverter (24).

2. Drive system according to claim 1, having a fuse (18) between the battery (12) and the intermediate circuit (20), wherein the fuse (18) and the first thyristor (40) are connected in series to the battery (12) as the power source on activation of the first thyristor (40) in respect of a closed current circuit across the first thyristor (40).

3. Drive system (10) for an electric motor (26) having a connection means for a battery (12),
an inverter (24),
an intermediate circuit (20) on its input side and
a connection means for an electric motor (26) on its output side,
or drive system according to one of claims 1 or 2, **characterised by**
a rectifier (42) on the output side of the inverter (24) and parallel to a connected or connectable electric motor (26) as well as
on the output side of the rectifier (42) a second thyristor (44) that can be activated by the observer (38) contained in the drive system (10) or assigned to the drive system (10).

4. Method for operating a drive system (10) according to one of claims 1 or 2, wherein the first thyristor (40) is activated by the observer (38) when a measure of an intermediate circuit voltage exceeds a predetermined or predeterminable threshold value and wherein due to the activated thyristor (40) an armature short circuit of a connected electric motor (26) can be effected in the intermediate circuit (20) and across freewheeling diodes contained by the inverter (24).

5. Method for operating a drive system (10) according to claim 3, wherein the second thyristor (44) is activated by the observer (38) when a measure of an output voltage of the inverter (24) exceeds a predetermined or predeterminable threshold value.

6. Method according to claim 4 or claim 5, wherein in addition to activating the first thyristor (40) or in addition to activating the second thyristor (44) the observer (38) activates either the three lower transistors (36) of the inverter (24) or the three upper transistors (36) of the inverter (24) or the lower and upper transistors (36) together.

7. Method according to claim 6, wherein activation of the transistors (36) of the inverter (24) is terminated by the observer (38), when a measure of a speed of the electric motor (26) drops below a predetermined or predeterminable threshold value.

8. Method according to claim 5 or one of claims 6 or 7, in so far as reference is made back to claim 5, wherein the inverter (24) is isolated electrically from the battery (12) before termination of the activation of the transistors (36) of the inverter (24), in particular by the observer (38), in particular by opening at least one electrical or electronic switch (14, 16) between battery (12) and intermediate circuit (20) .

9. Method for testing the drive system according to one of claims 1 or 2, wherein the power converter (24) is isolated electrically from the battery (12) and the first thyristor (40) is activated and wherein a then resulting intermediate circuit current is compared by the observer (38) with an expected intermediate circuit current.

10. Method for testing the drive system according to claim 3, wherein the observer (38) activates the second thyristor (44) on the one hand and activates the inverter (24) on the other hand to output successive short voltage pulses and wherein the observer (38) monitors during each voltage pulse or after each voltage pulse whether the respective voltage pulse produces a current flow.

11. Computer program having program code means, for performing all the steps of any one of claims 4 to 10, when the computer program is executed on an observer (38) as a control facility of a drive system (10) according to one of claims 1 to 3 or as a control facility for such a drive system (10).

12. Computer program product having electronically readable control signals, which can interact with an observer (38) as a control facility in or for a drive system (10) according to one of claims 1 to 3 so that a method according to one of claims 4 to 10 is performed.

13. Drive system according to one of claims 1 to 3, wherein the observer (38) has a processing unit in the manner of a microprocessor and comprises a memory or has access to such a memory and wherein a computer program according to claim 11 is loaded into the memory.

## Revendications

1. Système ( 10 ) d'entraînement d'un moteur ( 26 ) électrique comprenant
une possibilité de connexion d'une batterie ( 12 ),
un onduleur ( 24 ),
un circuit ( 20 ) intermédiaire se trouvant à son côté d'entrée et
une possibilité de connexion d'un moteur ( 26 ) électrique à son côté de sortie,
**caractérisé par**
un premier thyristor ( 40 ), monté dans le circuit ( 20 ) intermédiaire, en parallèle à une capacité ( 22 ) de circuit intermédiaire et activable par un observateur ( 38 ) englobé par le système ( 10 ) d'entraînement ou associé au système ( 10 ) d'entraînement,
dans lequel le premier thyristor ( 40 ) peut être activé par l'observateur ( 38 ), si une grandeur d'une tension de circuit intermédiaire dépasse une valeur de seuil donnée à l'avance ou pouvant l'être et
dans lequel, au moyen du thyristor ( 40 ) activé dans le circuit ( 20 ) intermédiaire et par des diodes de roue libre englobées par l'onduleur ( 24 ), un court-circuit d'induit d'un moteur ( 26 ) électrique raccordé peut être provoqué.

2. Système d'entraînement suivant la revendication ( 1 ) comprenant un fusible ( 18 ), entre la batterie ( 12 ) et le circuit ( 20 ) intermédiaire, le fusible ( 18 ) et le premier thyristor ( 40 ) étant lorsque le premier thyristor ( 40 ) est activé, monté en série, du point de vue d'un circuit fermé par le premier thyristor ( 40 ), avec la batterie ( 12 ) comme source de courant.

3. Système ( 10 ) d'entraînement d'un moteur ( 26 ) électrique comprenant
une possibilité de connexion d'une batterie ( 12 ),
un onduleur ( 24 ),
un circuit ( 20 ) intermédiaire se trouvant à son côté d'entrée et
une possibilité de connexion d'un moteur ( 26 ) électrique à son côté de sortie,
ou système d'entraînement suivant l'une des revendications 1 ou 2,
**caractérisé par**
un redresseur ( 42 ) du côté de la sortie de l'onduleur
( 24 ) et en parallèle à un moteur ( 26 ) électrique, raccordé ou pouvant l'être ainsi que
du côté de la sortie de l'onduleur ( 42 ), un deuxième thyristor ( 44 ), activable par un observateur ( 38 ), englobé par le système ( 10 ) d'entraînement ou associé au système ( 10 ) d'entraînement.

4. Procédé pour faire fonctionner un système ( 10 ) d'entraînement suivant l'une des revendications 1 ou 2, dans lequel le premier thyristor ( 40 ) est activé par l'observateur ( 38 ), lorsqu'une grandeur d'une tension du circuit intermédiaire dépasse une valeur de seuil donnée à l'avance ou pouvant l'être et dans lequel, au moyen du thyristor ( 40 ) activé, on provoque dans le circuit ( 20 ) intermédiaire et par des diodes de roue libre englobées par l'onduleur ( 24 ), un court-circuit d'induit d'un moteur ( 26 ) électrique raccordé.

5. Procédé pour faire fonctionner un système ( 10 ) d'entraînement suivant la revendication 3, dans lequel le deuxième thyristor ( 44 ) est activé par l'observateur ( 38 ), lorsqu'une grandeur d'une tension de sortie de l'onduleur
( 24 ) dépasse une valeur de seuil donnée à l'avance ou pouvant l'être.

6. Procédé suivant la revendication 4 ou la revendication 5, dans lequel l'observateur ( 38 ) active ensemble, en plus de l'activation du premier thyristor ( 40 ) ou en plus de l'activation du deuxième thyristor ( 44 ), soit les trois transistors ( 36 ) inférieurs de l'onduleur ( 24 ), soit les trois transistors ( 36 ) supérieurs de l'onduleur ( 24 ) ou les transistors ( 36 ) inférieurs et les transistors ( 36 ) supérieurs.

7. Procédé suivant la revendication 6, dans lequel on fait cesser l'activation par l'observateur ( 38 ) des transistors ( 36 ) de l'onduleur ( 24 ), si une grandeur d'une vitesse de rotation du moteur ( 26 ) électrique devient inférieure à une valeur de seuil donnée à l'avance ou pouvant l'être.

8. Procédé suivant la revendication 5 ou l'une des revendications 6 ou 7, dans la mesure où elles se rapportent à la revendication 5, dans lequel l'onduleur ( 24 ) est, avant la cessation de l'activation des transistors ( 36 ) de l'onduleur ( 24 ), notamment par l'observateur ( 38 ), séparé électriquement de la batterie ( 12 ), notamment par l'ouverture d'au moins un interrupteur ( 14, 16 ) électrique ou électronique, entre la batterie ( 12 ) et le circuit ( 20 ) intermédiaire.

9. Procédé d'essai du système d'entraînement suivant l'une des revendications 1 ou 2, dans lequel on sépare l'onduleur ( 24 ) électriquement de la batterie ( 12 ) et on active le premier thyristor ( 40 ) et dans lequel un courant de circuit intermédiaire qui s'ensuit est alors comparé par l'observateur
( 38 ) à un courant de circuit intermédiaire auquel on s'attend.

10. Procédé d'essai du système d'entraînement suivant la revendication 3, dans lequel il est activé par l'observateur ( 38 ), d'une part le deuxième thyristor ( 44 ), et d'autre part l'onduleur ( 24 ) est commandé pour l'émission d'impulsions de tension courtes qui se succèdent et dans lequel il est contrôlé par l'observateur ( 38 ), pendant chaque impulsion de tension, ou après chaque impulsion de tension, si l'impulsion de tension respective donne un flux de courant.

11. Programme d'ordinateur ayant des moyens de code de programme, pour effectuer tous les stades de l'une quelconque des revendications 4 à 10, lorsque le programme d'ordinateur est réalisé sur un observateur ( 38 ) comme dispositif de commande d'un système ( 10 ) d'entraînement suivant l'une des revendications 1 à 3 ou comme dispositif de commande d'un système ( 10 ) d'entraînement de ce genre.

12. Produit de programme d'ordinateur ayant des signaux de commande pouvant être lus électroniquement, qui peuvent coopérer avec un observateur ( 38 ) comme dispositif de commande, dans ou pour un système ( 10 ) d'entraînement suivant l'une des revendications 1 à 3, de manière à réaliser un procédé suivant l'une des revendications 4 à 10.

13. Système d'entraînement suivant l'une des revendications 1 à 3, dans lequel l'observateur ( 38 ) a une unité de traitement à la manière d'un microprocesseur et comprend une mémoire ou a accès à une mémoire de ce genre et dans lequel un programme d'ordinateur suivant la revendication 11 est chargé dans la mémoire.
